# EUROPEAN PATENT APPLICATION

(11) **EP 1 598 990 A1**
(43) Date of publication of application: **23.11.2005**
(21) Application number: 04713975.3
(22) Date of filing: 24.02.2004
(51) Int. Cl.: H04L 12/56, H04M 3/00, H04M 11/00

(54) **PACKET TRANSMISSION DEVICE**

(30) Priority: 25.02.2003 JP 2003047793
(71) Applicant: MITSUBISHI DENKI KABUSHIKI KAISHA, Tokyo 100-8310 (JP)
(72) Inventor: FUSHIMI, Wataru, c/o Mitsubishi Denki Kabushiki K., Chiyoda-ku, Tokyo 100-8310 (JP); SUZUKI, Shigeaki, c/o Mitsubishi Denki Kabushiki K, Chiyoda-ku, Tokyo 100-8310 (JP)
(74) Representative: Pfenning, Meinig & Partner GbR
(86) International application number: PCT/JP2004/002099
(87) International publication number: WO 2004/077766

(57) **Abstract**

A packet transmission apparatus includes a voice encoding unit 1 for voice-encoding an incoming voice band signal, a packet generating unit 2 for accepting the encoded voice signal from the voice encoding unit, and for assembling packets from the encoded voice signal and outputting them, a redundant packet generating unit 3 for accepting the encoded voice signal from the voice encoding unit 1, and for assembling redundant packets, a selector 5 for selecting, as an output source that furnishes packets to a transmission line (i.e., a transmission destination), either the packet generating unit 2 or the redundant packet generating unit 3, and a facsimile signal detecting unit 4 for determining whether or not the voice band signal is a facsimile signal associated with facsimile communications which are data communications selected in advance, and for controlling the selection by the selector 5 according to the determination result.

## Description

### Field of the Invention

The present invention relates to a packet transmission apparatus that transmits a voice band signal using IP (Internet Protocol) packets. More particularly, it relates to a packet transmission apparatus that relays signals to be transmitted via facsimile communications by way of an IP network by assuming the signals as voice signals.

### Background of the Invention

There has been provided a transmission technology for capturing analog signals to be transmitted via data communications, such as facsimile communications, into a VoIP (Voice over Internet Protocol) gateway, as well as voice signals, and transmitting the analog signals, as IP packets, via an IP network. This prior art transmission technology is the one for transmitting signals to be transmitted via data communications by way of a VoIP gateway, just as they are, by assuming so-called voice band signals to be transmitted via data communications, such as facsimile communications, as voice signals (refer to non-patent reference 1, for example). In accordance with this transmission technology, voice communications can be established by using a standard function of VoIP gateways for implementing voice communications via an IP network, and facsimile communications similar to those via an analog line can be established in real time.
[Non-patent reference 1] "Nikkei communication" No. 2000.12.18, pp.154 to 159, published by Nikkei Business Publications, Inc._

A problem with prior art VoIP technologies is that although some noises only appear in voices when losses of IP packets occurs in a voice telephone calling, data communications may get itself into trouble when losses of IP packets occurs in the data communications. That is, although when voice communications are carried out, no trouble occurs as long as original analog signals can be reproduced to such an extent that human beings can catch corresponding voices on a receive side, communications cannot be implemented as long as signal waveforms are not faithfully reproduced on the receive side because voice band data signals to be transmitted via data communications, such as facsimile communications, are analog signals having complicated waveforms. Especially, when a transmission error occurs in a facsimile control signal used for controlling a communication procedure for carrying out facsimile communications, the facsimile communications may bring itself into a disconnection state.

The present invention is made in order to solve the above-mentioned problems, and it is therefore an object of the present invention to provide a packet transmission apparatus that can prevent itself from entering a disconnection state even though a packet loss occurs while packet transmission using VoIP is carried out, thereby implementing high-reliability communications.

### Disclosure of the Invention

In accordance with the present invention, there is provided a packet transmission apparatus including: a voice encoding unit for voice-encoding an incoming voice band signal; a packet generating unit for accepting the encoded voice signal from the voice encoding unit, and for assembling packets from the encoded voice signal and outputting them; a redundant packet generating unit for accepting the encoded voice signal from the voice encoding unit, and for assembling redundant packets to each of which error correction data is added and outputting the redundant packets; a selector unit for selecting, as an output source that furnishes packets to a transmission destination, either the packet generating unit or the redundant packet generating unit; and a signal detecting unit for determining whether or not the voice band signal is a signal associated with predetermined data communications, and for controlling selection by the selector unit according to a result of the determination.

Therefore, even in a case where a voice band signal associated with predetermined data communications is assumed as a voice signal, and is packetized and is transmitted over an IP network, as well as in a case where a voice signal to be transmitted via voice communications is IP-packetized using a VoIP technology, the packet transmission apparatus creates redundant packets from any signal associated with the predetermined data communications and transmits them to a receive-side apparatus. The packet transmission apparatus can thus implement high-reliability data communications even though a transmission error, such as a packet loss, occurs.

### Brief Description of the Figures

Fig. 1 is a block diagram showing the structure of a packet transmission apparatus in accordance with embodiment 1 of the present invention;
Fig. 2 is a diagram explaining packetizing processing performed by a packet generating unit;
Fig. 3 is a diagram explaining packetizing processing performed by a redundant packet generating unit;
Fig. 4 is a block diagram showing the structure of a packet transmission apparatus in accordance with embodiment 2 of the present invention;
Fig. 5 is a block diagram showing the structure of a packet transmission apparatus in accordance with embodiment 3 of the present invention;
Fig. 6 is a diagram explaining packetizing processing performed by a second redundant packet generating unit;
Fig. 7 is a block diagram showing the structure of a packet transmission apparatus in accordance with embodiment 4 of the present invention;
Fig. 8 is a block diagram showing the structure of a packet transmission apparatus in accordance with embodiment 5 of the present invention;
Fig. 9 is a block diagram showing the structure of a packet transmission apparatus in accordance with embodiment 6 of the present invention;
Fig. 10 is a block diagram showing the structure of a packet transmission apparatus in accordance with embodiment 7 of the present invention; and
Fig. 11 is a block diagram showing the structure of a packet transmission apparatus in accordance with embodiment 8 of the present invention.

### Preferred Embodiments of the Invention

Hereafter, in order to explain this invention in greater detail, the preferred embodiments of the present invention will be described with reference to the accompanying drawings.

### Embodiment 1.

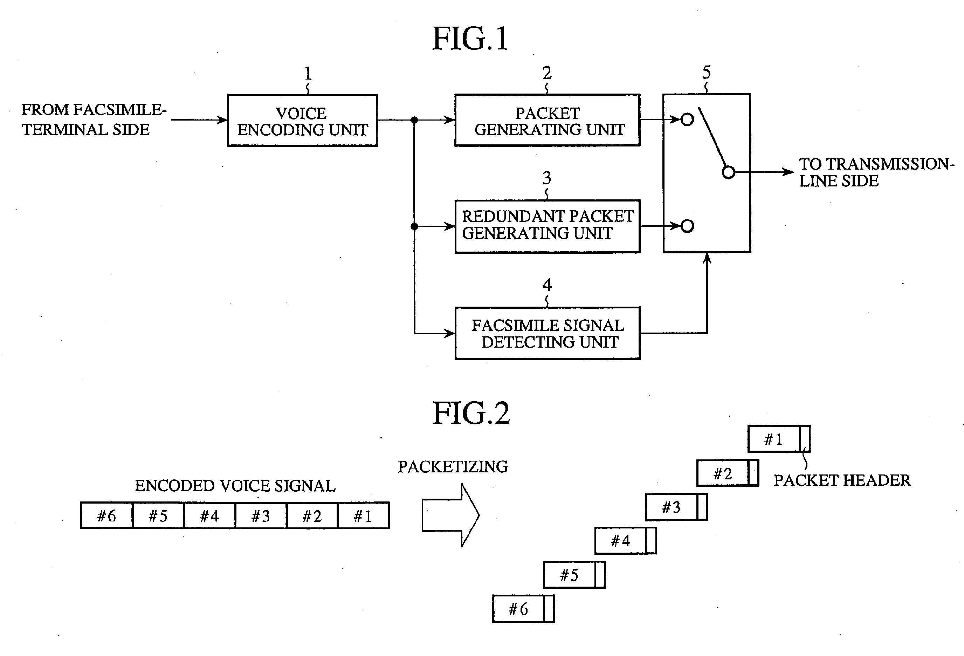

Fig. 1 is a block diagram showing the structure of a packet transmission apparatus in accordance with embodiment 1 of the present invention. The packet transmission apparatus in accordance with embodiment 1 is provided with a voice encoding unit 1 for accepting a communication signal having a voice band from a facsimile terminal not shown, a packet generating unit 2, a redundant packet generating unit 3 and a facsimile signal detecting unit (i.e., a signal detecting unit) 4 which all receive an encoded voice signal from the voice encoding unit 1, and a selector (i.e., a selecting unit) 5 for selecting either an output of the packet generating unit 2 or an output of the redundant packet generating unit 3.

The voice encoding unit 1 carries out a so-called voice coding process of converting an incoming voice band analog signal into a digital signal. The voice encoding unit 1 can carry out this voice coding processing according to a coding method defined by ITU (International Telecommunications Union)-T recommendation G.711. As an alternative, the voice encoding unit 1 can be so constructed as to comply with another coding method defined by ITU-T recommendation and to automatically select a voice coding method with which the receive-side apparatus not shown is compliant.

The packet generating unit 2 accepts the encoded voice signal from the voice encoding unit 1, and assembles packets from the encoded voice signal. Concretely, as shown in Fig. 2, after dividing the encoded voice signal into plural data which are separated by predetermined time intervals (i.e., data #1 to #6 in the figure), the packet generating unit 2 assembles packets to each of which a packet header is added. This packet header includes headers according to protocols, such as IP, UDP (User Datagram Protocol), and RTP (Real-time Transport Protocol). The RTP header includes sequence information time indicating whether the packets have arrived in particular order and stamp information used for determining the amount of jitter which is a fluctuation in intervals at which the packets have arrived. The receive-side apparatus can perform synchronization of packet reception and detection of losses of packets using these pieces of information.

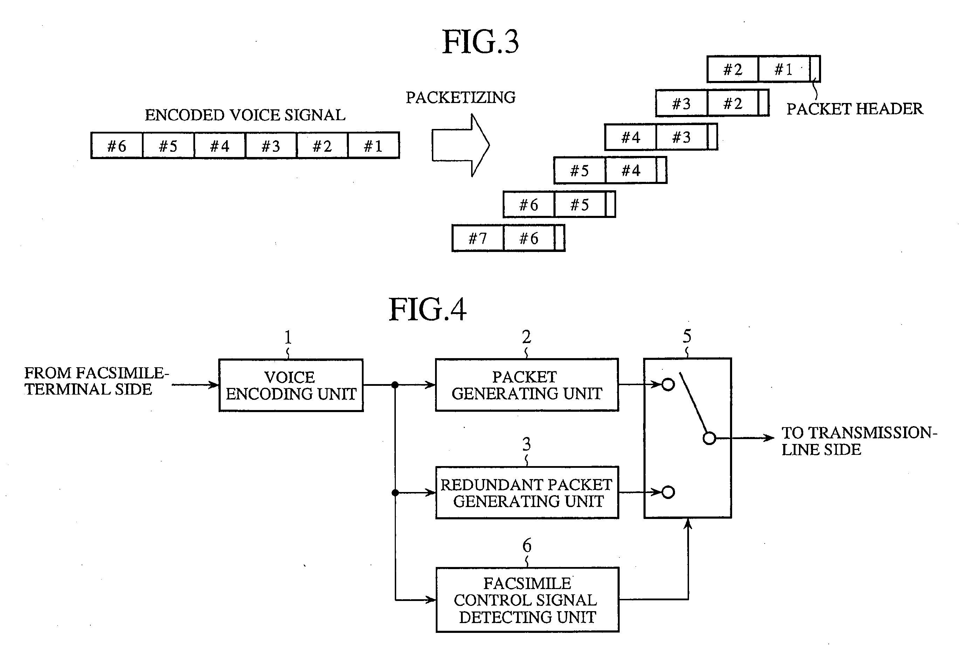

The redundant packet generating unit 3 accepts the encoded voice signal from the voice encoding unit 1, and assembles redundant packets to each of which data for transmission-error correction is added. Concretely, as shown in Fig. 3, after dividing the encoded voice signal into plural data which are separated by predetermined time intervals (i.e., data #1 to #6 in the figure), the redundant packet generating unit 3 assembles redundant packets (in the example of Fig. 3, redundant packets each of which is comprised of a combination of two data) in which two or more redundant data are included as data for transmission-error correction first. After that, the redundant packet generating unit 3 assembles and outputs redundant packets to each of which data transmitted to the selector immediately before the transmission of the next redundant packet is added as data for transmission-error correction (in the example of Fig. 3, one of the two data included in the redundant packet transmitted to the selector immediately before the transmission of the next redundant packet). As a result, even if a transmission error, such as a packet loss, occurs in transmitted data, the receive-side apparatus can correct (or restore) the data in which a transmission error has occurred based on redundant packets. Error correction codes other than data transmitted to the receive-side apparatus in the past can be used as data for transmission-error correction.

The facsimile signal detecting unit 4 selects facsimile communications in advance as data communications other than voice communications. The facsimile signal detecting unit 4 determines whether or not the voice band signal inputted to the voice encoding unit 1 is a facsimile signal associated with FAX image data to be transmitted via facsimile communications. The facsimile signal detecting unit 4 selects data communications via which the packet transmission apparatus can transmit data signals as voice signals by using VoIP, e.g., such data communications with a low degree of transmission-error-tolerance. In this case, the facsimile signal detecting unit 4 selects signals which should be transmitted with the highest stability from among data signals to be transmitted via the selected data communications and sets the selected signals as a target for detection.

The selector 5 is connected with the output of the packet generating unit 2 and the output of the redundant packet generating unit 3, selects either the output signal of the packet generating unit 2 or the output signal of the redundant packet generating unit 3 according to control by the facsimile signal detecting unit 4, and sends out the selected output signal onto a transmission line.

Next, the operation of the packet transmission apparatus in accordance with embodiment 1 of the present invention will be explained.

First, when accepting a voice band signal from the facsimile-terminal side, the voice encoding unit 1 performs voice coding, such as one according to ITU-T recommendation G.711, on the incoming voice band signal, and outputs the encoded voice signal to the packet generating unit 2, the redundant packet generating unit 3, and the facsimile signal detecting unit 4. The packet generating unit 2 performs a packetizing process, as shown in Fig. 2, on the inputted encoded voice signal. The redundant packet generating unit 3 performs a packetizing process, as shown in Fig. 3, on the inputted encoded voice signal.

The facsimile signal detecting unit 4 analyzes the encoded voice signal from the voice encoding unit 1, and determines whether or not the voice band signal inputted to the voice encoding unit 1 is a facsimile signal. When determining that the voice band signal inputted to the voice encoding unit 1 is a facsimile signal, the facsimile signal detecting unit 4 controls the selector 5 so as to select the output of the redundant packet generating unit 3. In contrast, when determining that the voice band signal inputted to the voice encoding unit 1 is not a facsimile signal, but is a voice signal, for example, the facsimile signal detecting unit 4 controls the selector 5 so as to select the output of the packet generating unit 2. The selector 5 selects either the packet generating unit 2 or the redundant packet generating unit 3 as an output source with respect to the transmission-line side according to the control by the facsimile signal detecting unit 4, and sends out the output data from the selected output source to the transmission-line side.

As a result, when carrying out facsimile communications with a not-shown receive-side apparatus, the packet transmission apparatus makes it possible for the receive-side apparatus to receive a facsimile signal including FAX image data which are a main target for transmission in the form of redundant packets assembled by the redundant packet generating unit 3 of the packet transmission apparatus. Therefore, even if a packet loss occurs while facsimile communications between the packet transmission apparatus and the not-shown receive-side apparatus are carried out, any transmission error caused by the packet loss can be recovered by using the redundant packets.

As mentioned above, in accordance with this embodiment 1, the packet transmission apparatus is provided with the voice encoding unit 1 for performing voice coding on a voice band signal, the packet generating unit 2 for accepting the encoded voice signal from,the voice encoding unit 1, and for assembling packets from the encoded voice signal, the redundant packet generating unit 3 for accepting the encoded voice signal from the voice encoding unit 1, and for assembling redundant packets, the selector 5 for selecting, as the output source that furnishes packets to the transmission-line side (i.e., the transmission destination), either the packet generating unit 2 or the redundant packet generating unit 3, and the facsimile signal detecting unit 4 for determining whether or not the voice band signal is a facsimile signal associated with facsimile communications which are pre-selected data communications, and for controlling the selection by the selector 5 according to the determination result. Therefore, even in a case where a voice band signal to be transmitted via facsimile communications is assumed as a voice signal, and is IP-packetized and is transmitted over an IP network, as well as in a case where a voice signal to be transmitted via voice communications is IP-packetized using a VoIP technology, the packet transmission apparatus assembles and transmits redundant packets associated with the facsimile signal indicating FAX image data, which is a main target of transmission via facsimile communications, to a receive-side apparatus. The packet transmission apparatus can thus implement high-reliability transmission of the facsimile signal even though a transmission error, such as a packet loss, occurs.

In accordance with above-mentioned embodiment 1, the selector 5 is disposed on the output side of the packet generating unit 2 and the redundant packet generating unit 3. As an alternative, the selector 5 can be disposed on the input side of the packet generating unit 2 and the redundant packet generating unit 3, and can output the encoded voice signal to either of the packet generating units 2 and 3 which it selects according to the control by the facsimile signal detecting unit 4.

### Embodiment 2.

Fig. 4 is a block diagram showing the structure of a packet transmission apparatus in accordance with embodiment 2 of the present invention. While the fundamental structure of the packet transmission apparatus in accordance with this embodiment is the same as that of above-mentioned embodiment 1, the packet transmission apparatus in accordance with this embodiment differs from that of embodiment 1 in that a facsimile control signal detecting unit (i.e., a signal detecting unit) 6 is disposed instead of the facsimile signal detecting unit 4. This facsimile control signal detecting unit 6 determines whether or not a voice band signal inputted into a voice encoding unit 1 is a facsimile control signal used for controlling a communication procedure for carrying out facsimile communications. The facsimile control signal is a signal which is transmitted between a transmit side and a receive side in order to control the communication procedure for carrying out facsimile communications. For example, in a case where the packet transmission apparatus is connected to a G3 facsimile terminal, the facsimile control signal is a V.21 modem signal used for controlling the communication procedure, which is defined by ITU-T recommendation T.30. The same components as those of Fig. 1 or like components are designated by the same reference numerals as shown in Fig. 1, and the explanation of those components will be omitted hereafter.

Next, the operation of the packet transmission apparatus in accordance with embodiment 2 of the present invention will be explained.

First, when accepting a voice band signal from the facsimile-terminal side, the voice encoding unit 1 performs voice coding, such as one according to ITU-T recommendation G. 711, on the incoming voice band signal, and outputs the encoded voice signal to a packet generating unit 2, a redundant packet generating unit 3, and the facsimile control signal detecting unit 6. The packet generating unit 2 performs a packetizing process, as shown in Fig. 2, on the inputted encoded voice signal. The redundant packet generating unit 3 performs a packetizing process, as shown in Fig. 3, on the inputted encoded voice signal.

The facsimile control signal detecting unit 6 analyzes the encoded voice signal from the voice encoding unit 1, and determines whether or not the voice band signal inputted to the voice encoding unit 1 is a facsimile signal such as a V.21 modem signal in the case of G3 facsimile. When determining that the voice band signal inputted to the voice encoding unit 1 is a facsimile control signal, the facsimile control signal detecting unit 6 controls the selector 5 so as to select the output of the redundant packet generating unit 3. In contrast, when determining that the voice band signal inputted to the voice encoding unit 1 is not a facsimile control signal, but is a voice signal or a V.29 modem signal which is a facsimile signal indicating FAX image data to be transmitted, for example, the facsimile control signal detecting unit 6 controls the selector 5 so as to select the output of the packet generating unit 2. The selector 5 selects either the packet generating unit 2 or the redundant packet generating unit 3 as an output source that furnishes packets to a transmission-line side according to the control by the facsimile control signal detecting unit 6, and sends out the output data from the selected output source to the transmission-line side.

As a result, when carrying out facsimile communications with a not-shown receive-side apparatus, the packet transmission apparatus of this embodiment makes it possible for the receive-side apparatus to receive a facsimile control signal used for controlling the communication procedure for carrying out facsimile communications in the form of redundant packets assembled by the redundant packet generating unit 3 of the packet transmission apparatus. Therefore, even if a packet loss occurs while facsimile communications between the packet transmission apparatus and the not-shown receive-side apparatus are carried out, a transmission error caused by the packet loss can be recovered by using the redundant packets and therefore the facsimile communications can be prevented from being interrupted.

As mentioned above, in accordance with this embodiment 2, the packet transmission apparatus is provided with the voice encoding unit 1 for performing voice coding on a voice band signal, the packet generating unit 2 for accepting the encoded voice signal from the voice encoding unit 1, and for assembling packets from the encoded voice signal, the redundant packet generating unit 3 for accepting the encoded voice signal from the voice encoding unit 1, and for assembling redundant packets, the selector 5 for selecting, as the output source that furnishes packets to the transmission-line side (i.e., the transmission destination), either the packet generating unit 2 or the redundant packet generating unit 3, and the facsimile control signal detecting unit 6 for determining whether or not the voice band signal is a facsimile control signal used for controlling a communication procedure for carrying out facsimile communications, and for controlling the selection by the selector 5 according to the determination result. Therefore, even in a case where a voice band signal to be transmitted via facsimile communications is assumed as a voice signal, and is IP-packetized and is transmitted over an IP network, as well as in a case where a voice signal to be transmitted via voice communications is IP-packetized using a VoIP technology, the packet transmission apparatus assembles and transmits redundant packets associated with the facsimile control signal used for controlling the communication procedure for carrying out facsimile communications to a receive-side apparatus. The packet transmission apparatus can thus implement high-reliability transmission of the facsimile control signal even though a transmission error, such as a packet loss, occurs. As a result, the packet transmission apparatus can provide facsimile communications in a condition of stability.

In accordance with above-mentioned embodiment 2, the selector 5 is disposed on the output side of the packet generating unit 2 and the redundant packet generating unit 3. As an alternative, the selector 5 can be disposed on the input side of the packet generating unit 2 and the redundant packet generating unit 3, and can output the encoded voice signal to either of the packet generating units 2 and 3 which it selects according to the control by the facsimile control signal detecting unit 6.

### Embodiment 3.

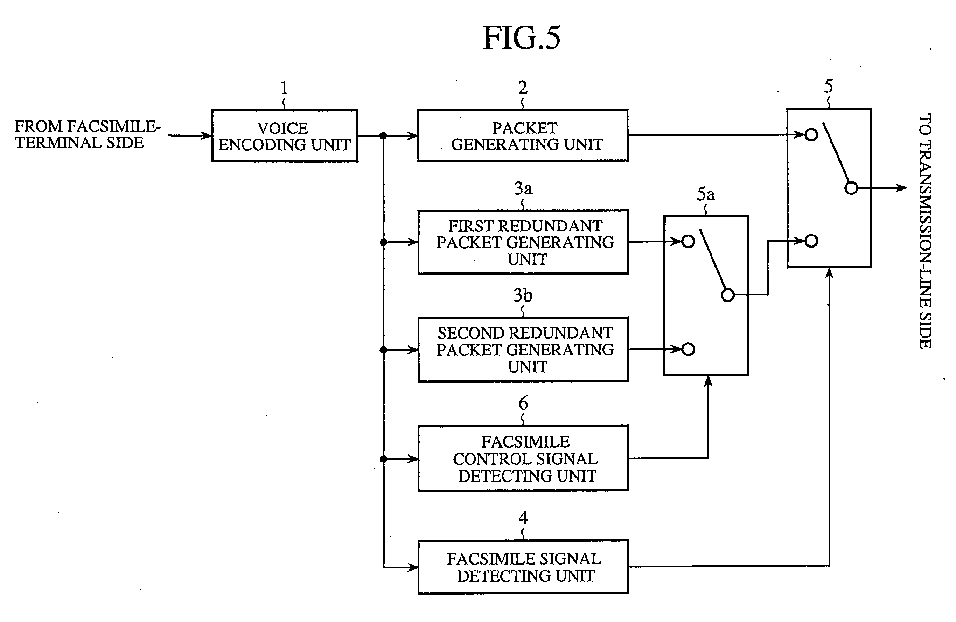

Fig. 5 is a block diagram showing the structure of a packet transmission apparatus in accordance with embodiment 3 of the present invention. The packet transmission apparatus in accordance with this embodiment 3 is provided with two redundant packet generating units (i.e., a redundant packet generating unit, a first redundant packet generating unit, and a second redundant packet generating unit) 3a and 3b, a selector (i.e., a first selector) 5a for selecting one of the outputs of these redundant packet generating units, a facsimile control signal detecting unit (i.e., a first signal detection unit) 6 for controlling a selection by the selector 5a, a selector (i.e., a second selector) 5 for selecting either an output of the packet generating unit 2 or an output of the selector 5a, and a facsimile signal detecting unit (i.e., a second signal detection unit) 4 for controlling a selection by the selector 5.

The redundant packet generating unit 3a accepts an encoded voice signal from a voice encoding unit 1, and assembles redundant packets to each of which data for transmission-error correction is added. Concretely, as shown in Fig. 3 which is referred to in above-mentioned embodiment 1, after dividing the encoded voice signal into plural data which are separated by predetermined time intervals (i.e., data #1 to #6 in the figure), the redundant packet generating unit 3a assembles redundant packets (in the example of Fig. 3, redundant packets each of which is comprised of a combination of two data) in which two or more redundant data are included as data for transmission-error correction. After that, the redundant packet generating unit 3a assembles and outputs redundant packets to each of which data transmitted to the selector 5a immediately before the transmission of the next redundant packet is added as data for transmission-error correction (in the example of Fig. 3, one of the two data included in the redundant packet transmitted to the selector 5a immediately before the transmission of the next redundant packet). The redundant packet generating unit 3a of this embodiment operates fundamentally in the same way as the redundant packet generating unit 3 of above-mentioned embodiment 1.

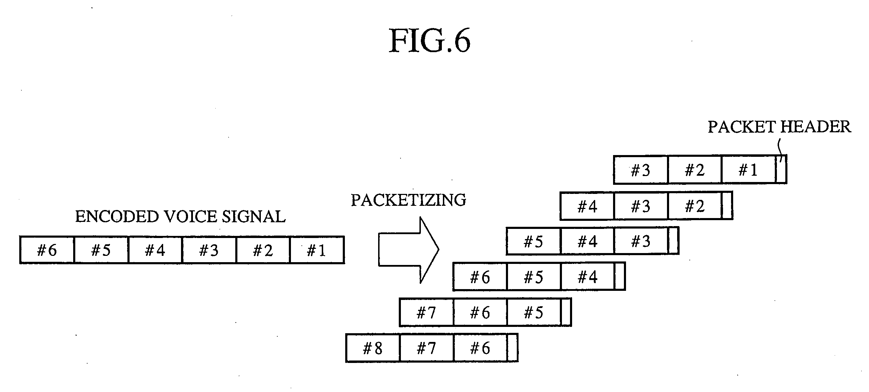

The second redundant packet generating unit 3b accepts the encoded voice signal processed by the voice encoding unit 1, and assembles redundant packets having a higher degree of transmission-error-tolerance than those assembled by the first redundant packet generating unit 3a. Concretely, as shown in Fig. 6, after dividing the encoded voice signal into plural data which are separated by predetermined time intervals (i.e., data #1 to #6 in the figure), the redundant packet generating unit 3b assembles redundant packets (in the example of Fig. 6, redundant packets each of which is comprised of a combination of three data) in which plural redundant data whose number is larger than that of redundant data combined by the redundant packet generating unit 3a are included as data for transmission-error correction. That is, the redundant packet generating unit 3b assembles and outputs redundant packets to each of which two data transmitted to the selector 5a immediately before the transmission of the next redundant packet is added as data for transmission-error correction (in the example of Fig. 3, two of the three data included in the redundant packet transmitted to the selector 5a immediately before the transmission of the next redundant packet).

Thus, since each redundant packet assembled by the second redundant packet generating unit 3b has a larger number of data redundantly included therein, i.e., a higher degree of redundancy than each redundant packet assembled by the first redundant packet generating unit 3a (that is, the number of times which the second redundant packet generating unit 3b transmits the same data is larger than the number of times which the first redundant packet generating unit 3a transmits the same data), there is a high possibility that a receive-side apparatus can correct (or restore) received data when a transmission error, such as a packet loss, occurs in the received data. That is, this fact means that the redundant packets assembled by the second redundant packet generating unit 3b have a higher degree of transmission-error-tolerance than those assembled by the first redundant packet generating unit 3a.

In the redundant packets assembled by the first redundant packet generating unit 3a and/or the second redundant packet generating unit 3b, error correction codes can be used as data for transmission-error correction, instead of above-mentioned data transmitted to the receive-side apparatus in past. In this case, the second redundant packet generating unit 3b assembles redundant packets using codes having a higher error detection and correction capability than that of codes which the first redundant packet generating unit 3a uses in order to assemble redundant packets.

The facsimile signal detecting unit 4 selects facsimile communications in advance as data communications other than voice communications. The facsimile signal detecting unit 4 determines whether or not the voice band signal inputted to the voice encoding unit 1 is a facsimile signal indicating FAX image data to be transmitted via facsimile communications. The facsimile signal detecting unit 4 selects data communications via which the packet transmission apparatus can transmit data signals as voice signals by using VoIP, e.g., such data communications with a low degree of transmission-error-tolerance.

Like the facsimile signal detecting unit 4, the facsimile control signal detecting unit 6 selects facsimile communications in advance as data communications other than voice communications. The facsimile control signal detecting unit 6 determines whether or not the voice band signal inputted to the voice encoding unit 1 is a facsimile control signal used for controlling a communication procedure for carrying out facsimile communications. As shown in above-mentioned embodiment 2, the facsimile control signal is a signal which is transmitted between a transmit side and a receive side in order to control the communication procedure of carrying out facsimile communications. For example, in a case where the packet transmission apparatus is connected to a G3 facsimile terminal, the facsimile control signal is a V.21 modem signal used for controlling the communication procedure, which is defined by ITU-T recommendation T.30.

The selector 5 selects either the output signal from the packet generating unit 2 or the output signal from the selector 5a based on the determination result indicating whether or not the inputted voice band signal is a facsimile signal, which is inputted thereto from the facsimile signal detecting unit 4, and outputs the selected output signal. The selector 5a selects either the output signal from the first redundant packet generating unit 3a or the output signal from the second redundant packet generating unit 3b based on a determination result indicating whether or not the voice band signal inputted into the voice encoding unit 1 is a facsimile control signal, which is inputted thereto from the facsimile control signal detecting unit 6, and outputs the selected output signal.

Next, the operation of the packet transmission apparatus in accordance with embodiment 3 of the present invention will be explained.

First, when accepting a voice band signal from the facsimile-terminal side, the voice encoding unit 1 performs voice coding, such as one according to ITU-T recommendation G.711, on the incoming voice band signal, and outputs the encoded voice signal to the packet generating unit 2, the first redundant packet generating unit 3a, the second redundant packet generating unit 3b, the facsimile signal detecting unit 4, and the facsimile control signal detecting unit 6. The packet generating unit 2 performs a packetizing process, as shown in Fig. 2, on the inputted encoded voice signal. The first redundant packet generating unit 3a performs a packetizing process, as shown in Fig. 3, on the inputted encoded voice signal. Furthermore, the second redundant packet generating unit 3b performs a packetizing process, as shown in Fig. 6, on the inputted encoded voice signal.

The facsimile signal control detecting unit 6 analyzes the encoded voice signal from the voice encoding unit 1, and determines whether or not the voice band signal inputted to the voice encoding unit 1 is a facsimile control signal such as a V.21 modem signal in the case of G3 facsimile. When determining that the voice band signal inputted to the voice encoding unit 1 is a facsimile control signal, the facsimile control signal detecting unit 6 controls the selector 5a so as to select the output-of the second redundant packet generating unit 3b. In contrast, when determining that the voice band signal inputted to the voice encoding unit 1 is not a facsimile control signal, but is a voice signal or a V.29 modem signal which is a facsimile signal indicating FAX image data to be transmitted, for example, the facsimile control signal detecting unit 6 controls the selector 5a so as to select the output of the first redundant packet generating unit 3a.

The facsimile signal detecting unit 4 analyzes the encoded voice signal from the voice encoding unit 1, and determines whether or not the voice band signal inputted to the voice encoding unit 1 is a facsimile signal. When determining that the voice band signal inputted to the voice encoding unit 1 is a facsimile signal, the facsimile signal detecting unit 4 controls the selector 5 so as to select the output of the selector 5a. In contrast, when determining that the voice band signal inputted to the voice encoding unit 1 is not a facsimile signal, but is a voice signal, for example, the facsimile signal detecting unit 4 controls the selector 5 so as to select the output of the packet generating unit 2.

The selector 5a selects either the first redundant packet generating unit 3a or the second redundant packet generating unit 3b, as an output source that furnishes redundant packets to a transmission-line side, based on the control signal from the facsimile control signal detecting unit 6, and outputs the selected output signal to the selector 5 (i.e., the transmission-line side). The selector 5 selects either the packet generating unit 2 or the selector 5a, as an output source that furnishes packets to the transmission-line side, based on the control by the facsimile signal detecting unit 4, and outputs the selected output data to the transmission-line side. That is, a facsimile control signal is packetized by the second redundant packet generating unit 3b, a facsimile signal is packetized by the first redundant packet generating unit 3a, and a voice band signal other than signals to be transmitted via facsimile communications is packetized by the packet generating unit 2, and packets thus assembled are outputted to the transmission-line side.

As a result, when the packet transmission apparatus carries out facsimile communications with a not-shown receive-side apparatus, the receive-side apparatus can receive a facsimile control signal used for controlling the communication procedure (i.e., important information required for establishing facsimile communications) in the form of redundant packets having a high degree of transmission-error-tolerance, which are assembled by the second redundant packet generating unit 3b, a facsimile signal indicating FAX image data which is a main target for transmission via facsimile communications in the form of redundant packets assembled by the first redundant packet generating unit 3a, and another signal in the form of packets assembled by the packet generating unit 2. Therefore, even if a packet loss occurs while facsimile communications between the packet transmission apparatus and a not-shown receive-side apparatus are carried out, the receive-side apparatus can recover received data by using redundant packets having different degrees of transmission-error-tolerance depending upon the types of signals associated with the facsimile communications and therefore the facsimile communications can be prevented from being interrupted.

As mentioned above, in accordance with this embodiment 3, the packet transmission apparatus is provided with the voice encoding unit 1 for performing voice coding on a voice band signal, the packet generating unit 2 for accepting the encoded voice signal from the voice encoding unit 1, and for assembling packets from the encoded voice signal, the first redundant packet generating unit 3a for accepting the encoded voice signal from the voice encoding unit 1, and for assembling redundant packets, the second redundant packet generating unit 3b for accepting the encoded voice signal from the voice encoding unit 1, and for assembling redundant packets having a higher degree of redundancy than those assembled by the first redundant packet generating unit 3a, the selector 5a for selecting, as an output source that furnishes packets to the transmission-line side (i.e., the transmission destination), either the first redundant packet generating unit 3a or the second redundant packet generating unit 3b, the selector 5 for selecting, as an output source that furnishes packets to the transmission-line side (i.e., the transmission destination), either the packet generating unit 2 or the selector 5a, the facsimile control signal detecting unit 6 for determining whether or not the voice band signal is a facsimile control signal used for controlling a communication procedure for carrying out facsimile communications, and for controlling the selection by the selector 5a according to the determination result, and the facsimile signal detecting unit 4 for determining whether or not the voice band signal is a facsimile signal, and for controlling the selection by the selector 5 according to the determination result. Therefore, even in a case where a voice band signal to be transmitted via facsimile communications is assumed as a voice signal, and is IP-packetized and is transmitted over an IP network, as well as in a case where a voice signal to be transmitted via voice communications is IP-packetized using a VoIP technology, the packet transmission apparatus assembles redundant packets having different degrees of transmission error immunity from the facsimile signal indicating FAX image data, which is a main target of transmission via facsimile communications, and the facsimile control signal used for controlling the communication procedure for carrying out facsimile communications, the different degrees of transmission-error-tolerance depending upon the difference in importance between the facsimile signal and the facsimile control signal, and transmits the redundant packets to a receive-side apparatus. As a result, the packet transmission apparatus can implement high-reliability transmission of the facsimile control signal even though a transmission error, such as a packet loss, occurs. As a result, the packet transmission apparatus can provide facsimile communications in a condition of stability.

In accordance with above-mentioned embodiment 3, the facsimile control signal and the facsimile signal for facsimile communications are used in order to control the selection by the selector 5 and the selection by the selector 5a, respectively. As an alternative, each of the signal detecting units 4 and 6 can be so constructed as to determine if the encoded voice signal from the voice encoding unit 1 is of which one of a larger number of signal types into which signals to be transmitted via facsimile communications are subdivided according to importance to the facsimile communications, and the packet transmission apparatus can be provided with a plurality of redundant packet generating units for assembling redundant packets having different degrees of transmission-error-tolerance according to the number of signal types, and a plurality of selectors for selecting packets to be transmitted from those redundant packets having different degrees of transmission-error-tolerance. Therefore, the packet transmission apparatus can take flexible measures against transmission errors according to the types of signals to be processed thereby and transmitted via data communications, and can implement high-reliability data communications.

In addition, in accordance with above-mentioned embodiment 3, the selector 5 is disposed on the output side of the packet generating unit 2 and the selector 5a and the selector 5a is disposed on the output side of the first redundant packet generating unit 3a and the second redundant packet generating unit 3b. As an alternative, the selector 5a can be disposed on the input side of the first redundant packet generating unit 3a and the second redundant packet generating unit 3b, and can output the encoded voice signal to either of the first redundant packet generating unit 3a and the second redundant packet generating unit 3b which it selects according to the control by the facsimile control signal detecting unit 6, and the selector 5 can be disposed on the input side of the packet generating unit 2 and the selector 5a, and can output the encoded voice signal to either of the packet generating unit 2 and the selector 5a which it selects according to the control by the facsimile signal detecting unit 4.

### Embodiment 4.

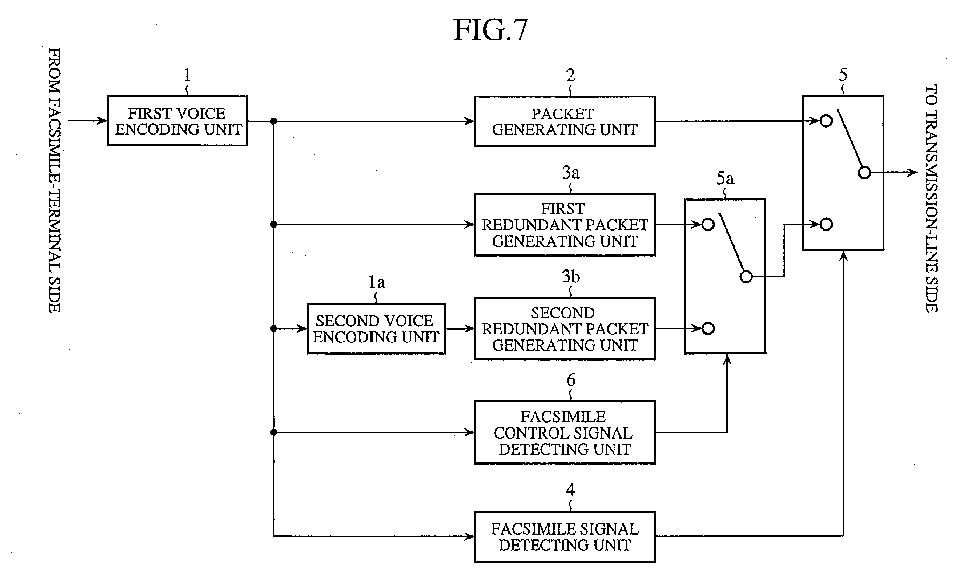

Fig. 7 is a block diagram showing the structure of a packet transmission apparatus in accordance with embodiment 4 of the present invention. While the fundamental structure of the packet transmission apparatus in accordance with this embodiment is the same as that of above-mentioned embodiment 3, the packet transmission apparatus in accordance with this embodiment differs from that of embodiment 3 in that a second voice encoding unit 1a having a lower coding rate than that of a first voice encoding unit 1 is disposed on an input side of a second redundant packet generating unit 3b. This second voice encoding unit 1a has a lower coding rate than that of the first voice encoding unit 1, and can perform coding processing on an encoded voice signal inputted thereto from the first voice encoding unit 1 with a high degree of efficiency.

For example, when the first voice encoding unit 1 performs voice coding processing by using a method defined by ITU-T recommendation G. 711 (i.e., by using a 64 kbit/s PCM (Pulse Code Modulation) voice CODEC), like that of any one of above-mentioned embodiments, the second voice encoding unit 1a performs high-efficiency coding processing with a higher coding rate than that of the first voice encoding unit 1 by using a method defined by, for example, ITU-T recommendation G.726 (i.e., by using a 16, 24, 32 and 40 kbit/s ADPCM (Adaptive Differential Pulse Code Modulation) voice CODEC). The same components as those of Fig. 5 or like components are designated by the same reference numerals as shown in Fig. 5, and the explanation of those components will be omitted hereafter.

Next, the operation of the packet transmission apparatus in accordance with embodiment 4 of the present invention will be explained.

First, when accepting a voice band signal from a facsimile-terminal side, the voice encoding unit 1 performs voice coding, such as one according to ITU-T recommendation G.711, on the incoming voice band signal, and outputs the encoded voice signal to a packet generating unit 2, a first redundant packet generating unit 3a, the second voice encoding unit 1a, a facsimile signal detecting unit 4, and a facsimile control signal detecting unit 6. The second voice encoding unit 1a performs voice coding having a higher degree of efficiency than the first voice encoding unit, such as one according to ITU-T recommendation G.711, on the inputted encoded voice signal, and outputs the encoded voice signal to a second redundant packet generating unit 3b.

The packet generating unit 2 performs a packetizing process, as shown in Fig. 2, on the encoded voice signal inputted thereto from the first voice encoding unit 1. The first redundant packet generating unit 3a performs a packetizing process, as shown in Fig. 3, on the encoded voice signal inputted thereto from the first voice encoding unit 1. Furthermore, the second redundant packet generating unit 3b performs a packetizing process, as shown in Fig. 6, on the encoded voice signal inputted thereto from the second voice encoding unit 1a. That is, the redundant packet generating units 3a and 3b create redundant packets having different degrees of transmission-error-tolerance according to the coding rate of the inputted, encoded voice signal.

The facsimile control signal detecting unit 6 analyzes the encoded voice signal from the voice encoding unit 1, and determines whether or not the voice band signal inputted to the voice encoding unit 1 is a facsimile signal such as a V.21 modem signal in the case of G3 facsimile. When determining that the voice band signal inputted to the voice encoding unit 1 is a facsimile control signal, the facsimile control signal detecting unit 6 controls the selector 5a so as to select the output of the second redundant packet generating unit 3b. In contrast, when determining that the voice band signal inputted to the voice encoding unit 1 is not a facsimile control signal, but is a voice signal or a V.29 modem signal which is a facsimile signal indicating FAX image data to be transmitted, for example, the facsimile control signal detecting unit 6 controls the selector 5a so as to select the output of the first redundant packet generating unit 3a.

The facsimile signal detecting unit 4 analyzes the encoded voice signal from the voice encoding unit 1, and determines whether or not the voice band signal inputted to the voice encoding unit 1 is a facsimile signal. When determining that the voice band signal inputted to the voice encoding unit 1 is a facsimile signal, the facsimile signal detecting unit 4 controls the selector 5 so as to select the output of the selector 5a. In contrast, when determining that the voice band signal inputted to the voice encoding unit 1 is not a facsimile signal, but is a voice signal, for example, the facsimile signal detecting unit 4 controls the selector 5 so as to select the output of the packet generating unit 2.

The selector 5a selects either the first redundant packet generating unit 3a or the second redundant packet generating unit 3b, as an output source that furnishes redundant packets to a transmission-line side, based on the control by the facsimile control signal detecting unit 6, and outputs the selected output signal to the selector 5 (i.e., the transmission-line side). The selector 5 selects either the packet generating unit 2 or the selector 5a, as an output source that furnishes redundant packets to the transmission-line side, based on the control by the facsimile signal detecting unit 4, and outputs the selected output signal to the transmission-line side.

That is, a facsimile control signal is packetized by the second redundant packet generating unit 3b after high-efficiency voice coding processing is further performed on the facsimile control signal by the second voice encoding unit 1a, a facsimile signal is packetized by the first redundant packet generating unit 3a after voice coding processing is performed on the facsimile signal by the first voice encoding unit, and a voice band signal other than signals to be transmitted via facsimile communications is packetized by the packet generating unit 2 after voice coding processing is performed on the voice band signal by the first voice encoding unit, and packets thus created are outputted to the transmission-line side.

As a result, when the packet transmission apparatus carries out facsimile communications with a not-shown receive-side apparatus, the receive-side apparatus can receive the facsimile control signal used for controlling a communication procedure (i.e., important information required for establishing facsimile communications) as redundant packets having a high degree of transmission-error-tolerance, which are created by the second redundant packet generating unit 3b after high-efficiency voice coding processing has been further performed on the facsimile control signal by the second voice encoding unit 1a, and can carry out data recovery using the redundant packets that provide the best reproducibility of the waveform of the original analog signal for the facsimile control signal and that exhibit a high degree of transmission-error-tolerance even if a packet loss occurs.

As mentioned above, in accordance with this embodiment 4, the packet transmission apparatus is provided with the voice encoding unit 1 for performing voice coding on a voice band signal, the second voice encoding unit 1a having a lower coding rate than the first voice encoding unit 1, for performing high-efficiency coding processing on the encoded voice signal inputted thereto from the first voice encoding unit 1, the packet generating unit 2 for accepting the encoded voice signal from the voice encoding unit 1, and for assembling packets from the encoded voice signal, the first redundant packet generating unit 3a for accepting the encoded voice signal from the voice encoding unit 1, and for assembling redundant packets, the second redundant packet generating unit 3b for accepting the encoded voice signal from the voice encoding unit 1a, and for assembling redundant packets having a higher degree of redundancy than those created by the first redundant packet generating unit 3a, the selector 5a for selecting, as an output source that furnishes packets to the transmission-line side (i.e., the transmission destination), either the first redundant packet generating unit 3a or the second redundant packet generating unit 3b, the selector 5 for selecting, as an output source that furnishes packets to the transmission-line side (i.e., the transmission destination), either the packet generating unit 2 or the selector 5a, the facsimile control signal detecting unit 6 for determining whether or not the voice band signal is a facsimile control signal used for controlling a communication procedure for carrying out facsimile communications, and for controlling the selection by the selector 5a according to the determination result, and the facsimile signal detecting unit 4 for determining whether or not the voice band signal is a facsimile signal, and for controlling the selection by the selector 5 according to the determination result. Therefore, even in a case where a voice band signal to be transmitted via facsimile communications is assumed as a voice signal, and is IP-packetized and is transmitted over an IP network, as well as in a case where a voice signal to be transmitted via voice communications is IP-packetized using a VoIP technology, the packet transmission apparatus performs higher-efficiency voice coding on the facsimile signal indicating FAX image data, which is a main target of transmission via facsimile communications, and the facsimile control signal used for controlling the communication procedure for carrying out facsimile communications, the voice coding performed on the facsimile signal and the facsimile control signal depending upon their importance, and assembles and transmits redundant packets having different degrees of transmission-error-tolerance depending upon the difference in importance between the facsimile signal and the facsimile control signal to a receive-side apparatus. As a result, the packet transmission apparatus can implement high-reliability transmission of the facsimile control signal even though a transmission error, such as a packet loss, occurs. As a result, the packet transmission apparatus can provide facsimile communications in a condition of stability.

In accordance with above-mentioned embodiment 4, the facsimile control signal and the facsimile signal for facsimile communications are used in order to control the selection by the selector 5 and the selection by the selector 5a, respectively. As an alternative, each of the signal detecting units 4 and 6 can be so constructed as to determine if the encoded voice signal from the voice encoding unit 1 is of which one of a larger number of signal types into which signals to be transmitted via facsimile communications are subdivided according to importance to the facsimile communications, and the packet transmission apparatus can be provided with a plurality of voice encoding units having different coding rates according to the number of signal types, a plurality of redundant packet generating units for assembling redundant packets having different degrees of transmission-error-tolerance according to those different coding rates, and a plurality of selectors for selecting packets to be transmitted from those redundant packets having different degrees of transmission-error-tolerance. Therefore, the packet transmission apparatus can take flexible measures against transmission errors according to the types of signals to be processed thereby and transmitted via data communications, and can implement high-reliability data communications. In addition, in accordance with above-mentioned embodiment 4, a plurality of voice encoding units having different coding rates are provided and the packet transmission apparatus can be so constructed as to automatically select a voice coding method associated with the receive-side apparatus.

In addition, in accordance with above-mentioned embodiment 4, the selector 5 is disposed on the output side of the packet generating unit 2 and the selector 5a and the selector 5a is disposed on the output side of the first redundant packet generating unit 3a and the second redundant packet generating unit 3b. As an alternative, the selector 5a can be disposed on the input side of the first redundant packet generating unit 3a and the second redundant packet generating unit 3b (via the second voice encoding unit 1a), and can output the encoded voice signal to either of the first redundant packet generating unit 3a and the second redundant packet generating unit 3b which it selects according to the control by the facsimile control signal detecting unit 6, and the selector 5 can be disposed on the input side of the packet generating unit 2 and the selector 5a, and can output the encoded voice signal to either of the packet generating unit 2 and the selector 5a which it selects according to the control by the facsimile signal detecting unit 4.

### Embodiment 5.

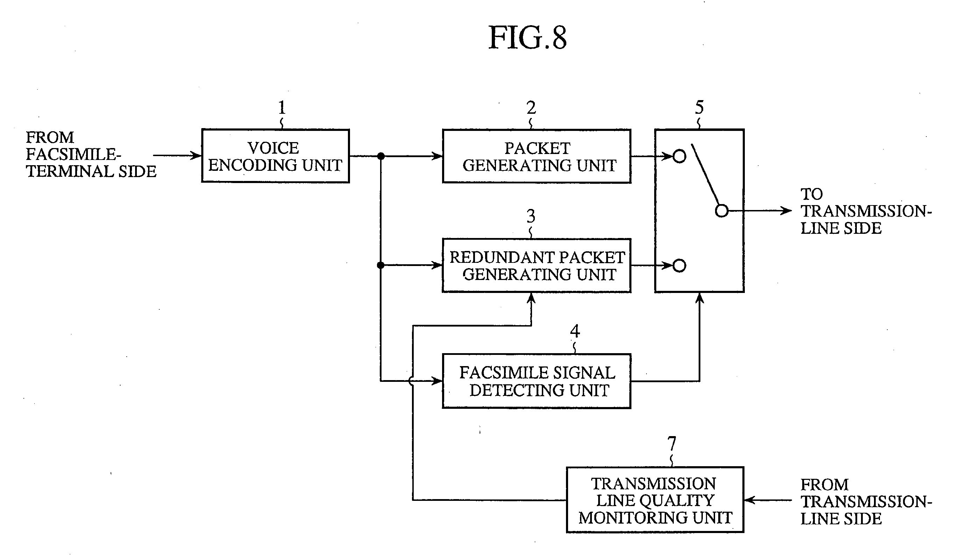

Fig. 8 is a block diagram showing the structure of a packet transmission apparatus in accordance with embodiment 5 of the present invention. While the fundamental structure of the packet transmission apparatus in accordance with this embodiment is the same as that of above-mentioned embodiment 1, the packet transmission apparatus in accordance with this embodiment differs from that of embodiment 1 in that it is provided with a transmission line quality monitoring unit (i.e., a line quality monitoring unit) 7 for controlling the degree of transmission-error-tolerance of redundant packets assembled by a redundant packet generating unit 3. The transmission line quality monitoring unit 7 determines the line quality of a transmission line for connecting between the packet transmission apparatus itself and a receive-side apparatus, determines the degree of transmission-error-tolerance (e.g., the degree of redundancy) of the redundant packets based on the result of the determination of the line quality, and notifies the degree of transmission-error-tolerance to the redundant packet generating unit 3. The same components as those of Fig. 1 or like components are designated by the same reference numerals as shown in Fig. 1, and the explanation of those components will be omitted hereafter.

Next, the operation of the packet transmission apparatus in accordance with embodiment 5 of the present invention will be explained.

First, when accepting a voice band signal from a facsimile-terminal side, a voice encoding unit 1 performs voice coding, such as one according to ITU-T recommendation G.711, on the incoming voice band signal, and outputs the encoded voice signal to a packet generating unit 2, the redundant packet generating unit 3, and a facsimile signal detecting unit 4.

The transmission line quality monitoring unit 7 monitors a loss, a fluctuation (jitter), etc. of packets which the packet transmission apparatus receives from an opposite apparatus (i.e., a receive-side apparatus), and determines the line quality of the transmission line between the packet transmission apparatus and the receive-side apparatus, determines the degree of transmission-error-tolerance (e.g., the degree of redundancy) of redundant packets based on the line quality of the transmission line, and notifies the degree of transmission-error-tolerance to the redundant packet generating unit 3.

To be more specific, the transmission line quality monitoring unit 7 compares the result of monitoring of, for example, the number of times that packet losses occur or the degree of fluctuation (or jitter) in the interval of packet arrival with a predetermined value so as to determine the line quality of the transmission line as a numeric value. The transmission line quality monitoring unit 7 then compares the numeric value with a predetermined threshold of the line quality of the transmission line so as to determine whether or not the line quality of the transmission line is good. After that, when determining that the line quality is good, the transmission line quality monitoring unit 7 lowers the degree of transmission-error-tolerance (e.g., the degree of redundancy) of redundant packets, whereas when determining that the line quality is bad, the transmission line quality monitoring unit 7 raises the degree of transmission-error-tolerance (e.g., the degree of redundancy) of redundant packets.

The packet generating unit 2 performs packetizing processing, as shown in Fig. 2, on the inputted encoded voice signal, and the redundant packet generating unit 3 performs packetizing processing, as shown in Fig. 3, on the inputted encoded voice signal based on the degree of transmission-error-tolerance (e.g., the degree of redundancy) about which the redundant packet generating unit 3 is notified by the transmission line quality monitoring unit 7.

The facsimile signal detecting unit 4 analyzes the encoded voice signal from the voice encoding unit 1, and determines whether or not the voice band signal inputted to the voice encoding unit 1 is a facsimile signal. When determining that the voice band signal inputted to the voice encoding unit 1 is a facsimile signal, the facsimile signal detecting unit 4 controls the selector 5 so as to select the output of the redundant packet generating unit 3. In contrast, when determining that the voice band signal inputted to the voice encoding unit 1 is not a facsimile signal, but is a voice signal, for example, the facsimile signal detecting unit 4 controls the selector 5 so as to select the output of the packet generating unit 2. The selector 5 selects either the packet generating unit 2 or the redundant packet generating unit 3, as an output source that furnishes redundant packets to the transmission-line side, based on the control by the facsimile signal detecting unit 4, and outputs the selected output signal to the transmission-line side.

As a result, when carrying out facsimile communications with a not-shown receive-side apparatus, the packet transmission apparatus makes it possible for the receive-side apparatus to receive a facsimile signal including FAX image data which are a main target for transmission in the form of redundant packets having a degree of transmission-error-tolerance (e.g., a degree of redundancy) depending upon the line quality of the transmission line. Therefore, even if a packet loss occurs while facsimile communications between the packet transmission apparatus and the not-shown receive-side apparatus are carried out, any transmission error caused by the packet loss can be recovered by using the redundant packets.

As mentioned above, in accordance with this embodiment 5, the packet transmission apparatus is provided with the transmission line quality monitoring unit 7 for monitoring the line quality of the transmission line and for controlling the degree of transmission-error-tolerance of redundant packets assembled by the redundant packet generating unit 3 according to the line quality of the transmission line. Therefore, even in a case where a voice band signal to be transmitted via facsimile communications is assumed as a voice signal, and is IP-packetized and is transmitted over an IP network, as well as in a case where a voice signal to be transmitted via voice communications is IP-packetized using a VoIP technology, the packet transmission apparatus assembles redundant packets having a degree of transmission-error-tolerance (e.g., a degree of redundancy) depending upon the line quality of the transmission line from a facsimile signal including FAX image data which are a main target for transmission via facsimile communications, and then transmits the redundant packets to a receive-side apparatus. As a result, even though a transmission error, such as a packet loss, occurs, the packet transmission apparatus can effectively deal with the occurrence of the transmission error and can implement high-reliability transmission of a facsimile control signal. As a result, the packet transmission apparatus can provide facsimile communications in a condition of stability.

In accordance with above-mentioned embodiment 5, the selector 5 is disposed on the output side of the packet generating unit 2 and the redundant packet generating unit 3. As an alternative, the selector 5 can be disposed on the input side of the packet generating unit 2 and the redundant packet generating unit 3, and can output the encoded voice signal to either of the packet generating units 2 and 3 which it selects according to the control by the facsimile signal detecting unit 4.

In accordance with any one of above-mentioned embodiments 2 to 4, the transmission line quality monitoring unit 7 of this embodiment can be added to the packet transmission apparatus. This variant offers the same advantage as provided by above-mentioned embodiment 5 in addition to the advantage provided by any one of above-mentioned embodiments 2 to 4.

### Embodiment 6.

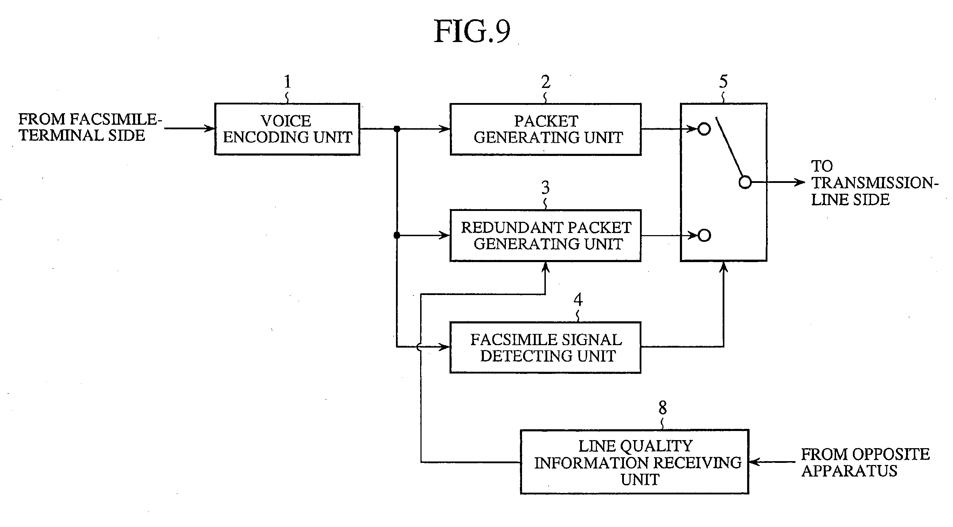

Fig. 9 is a block diagram showing the structure of a packet transmission apparatus in accordance with embodiment 6 of the present invention. While the fundamental structure of the packet transmission apparatus in accordance with this embodiment is the same as that of above-mentioned embodiment 1, the packet transmission apparatus in accordance with this embodiment differs from that of embodiment 1 in that it is provided with a line quality information receiving unit (i.e., a line quality information acquiring unit) 8 for controlling the degree of transmission-error-tolerance of redundant packets created by a redundant packet generating unit 3. The line quality information receiving unit 8 acquires information about the line quality of a transmission line that connects between the packet transmission apparatus itself and a receive-side apparatus from the receive-side apparatus (i.e., an opposite apparatus), determines the degree of transmission error immunity (e.g., the degree of redundancy) of redundant packets based on the line quality information, and notifies the degree of transmission-error-tolerance to the redundant packet generating unit 3. The same components as those of Fig. 1 or like components are designated by the same reference numerals as shown in Fig. 1, and the explanation of those components will be omitted hereafter.

Next, the operation of the packet transmission apparatus in accordance with embodiment 6 of the present invention will be explained.

First, when accepting a voice band signal from a facsimile-terminal side, a voice encoding unit 1 performs voice coding, such as one according to ITU-T recommendation G.711, on the incoming voice band signal, and outputs the encoded voice signal to a packet generating unit 2, the redundant packet generating unit 3, and a facsimile signal detecting unit 4.

The line quality information receiving unit 8 acquires, as the line quality information about the line quality of the transmission line that connects between the packet transmission apparatus itself and the receive-side apparatus, information about a loss, a fluctuation (jitter), etc. of packets which the opposite apparatus (i.e., the receive-side apparatus) receives, and determines the degree of transmission-error-tolerance (e.g., the degree of redundancy) of redundant packets based on the line quality of the transmission line, and notifies the degree of transmission-error-tolerance to the redundant packet generating unit 3.

To be more specific, the line quality information receiving unit 8 analyzes the line quality information and compares either the number of times that packet losses occur or the degree of fluctuation (or jitter) in the interval of packet arrival in the receive-side apparatus with a predetermined value so as to determine the line quality of the transmission line as a numeric value. The line quality information receiving unit 8 then compares the numeric value with a predetermined threshold of the line quality of the transmission line so as to determine whether or not the line quality of the transmission line is good. After that, when determining that the line quality is good, the line quality information receiving unit 8 lowers the degree of transmission-error-tolerance (e.g., the degree of redundancy) of redundant packets, whereas when determining that the line quality is bad, the line quality information receiving unit 8 raises the degree of transmission-error-tolerance (e.g., the degree of redundancy) of redundant packets.

The packet generating unit 2 performs packetizing processing, as shown in Fig. 2, on the inputted encoded voice signal, and the redundant packet generating unit 3 performs packetizing processing, as shown in Fig. 3, on the inputted encoded voice signal based on the degree of transmission-error-tolerance (e.g., the degree of redundancy) about which the redundant packet generating unit 3 is notified by the line quality information receiving unit 8.

The facsimile signal detecting unit 4 analyzes the encoded voice signal from the voice encoding unit 1, and determines whether or not the voice band signal inputted to the voice encoding unit 1 is a facsimile signal. When determining that the voice band signal inputted to the voice encoding unit 1 is a facsimile signal, the facsimile signal detecting unit 4 controls the selector 5 so as to select the output of the redundant packet generating unit 3. In contrast, when determining that the voice band signal inputted to the voice encoding unit 1 is not a facsimile signal, but is a voice signal, for example, the facsimile signal detecting unit 4 controls the selector 5 so as to select the output of the packet generating unit 2. The selector 5 selects either the packet generating unit 2 or the redundant packet generating unit 3, as an output source that furnishes redundant packets to the transmission-line side, based on the control by the facsimile signal detecting unit 4, and outputs the selected output signal to the transmission-line side.

As a result, when carrying out facsimile communications with a not-shown receive-side apparatus, the packet transmission apparatus makes it possible for the receive-side apparatus to receive a facsimile signal including FAX image data which are a main target for transmission in the form of redundant packets having a degree of transmission-error-tolerance (e.g., a degree of redundancy) depending upon the line quality information about the line quality of the transmission line which the packet transmission apparatus acquires from the receive-side apparatus. Therefore, even if a packet loss occurs while facsimile communications between the packet transmission apparatus and the not-shown receive-side apparatus are carried out, any transmission error caused by the packet loss can be recovered by using the redundant packets.

As mentioned above, in accordance with this embodiment 6, the packet transmission apparatus is provided with the line quality information receiving unit 8 for receiving line quality information about the line quality of a transmission line that connects between the packet transmission apparatus itself and a receive-side apparatus, and for controlling the degree of transmission-error-tolerance of redundant packets assembled by the redundant packet generating unit 3 according to the line quality information received thereby. Therefore, even in a case where a voice band signal to be transmitted via facsimile communications is assumed as a voice signal, and is IP-packetized and is transmitted over an IP network, as well as in a case where a voice signal to be transmitted via voice communications is IP-packetized using a VoIP technology, the packet transmission apparatus assembles redundant packets having a degree of transmission-error-tolerance (e.g., a degree of redundancy) depending upon the line quality information about the line quality of the transmission line which the packet transmission apparatus acquires from the receive-side apparatus from a facsimile signal including FAX image data which are a main target for transmission via facsimile communications, and then transmits the redundant packets to a receive-side apparatus. As a result, even though a transmission error, such as a packet loss, occurs, the packet transmission apparatus can effectively deal with the occurrence of the transmission error and can implement high-reliability transmission of a facsimile controlsignal. As a result, the packet transmission apparatus can provide facsimile communications in a condition of stability.

In accordance with above-mentioned embodiment 6, the selector 5 is disposed on the output side of the packet generating unit 2 and the redundant packet generating unit 3. As an alternative, the selector 5 can be disposed on the input side of the packet generating unit 2 and the redundant packet generating unit 3, and can output the encoded voice signal to either of the packet generating units 2 and 3 which it selects according to the control by the facsimile signal detecting unit 4.

In accordance with any one of above-mentioned embodiments 2 to 4, the line quality information receiving unit 8 of this embodiment can be added to the packet transmission apparatus. This variant offers the same advantage as provided by above-mentioned embodiment 6 in addition to the advantage provided by any one of above-mentioned embodiments 2 to 4.

### Embodiment 7.

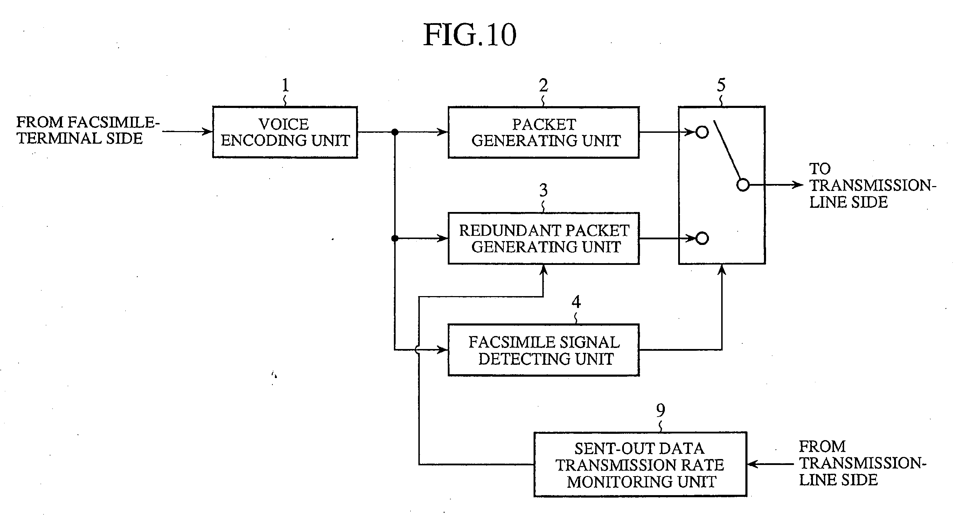

Fig. 10 is a block diagram showing the structure of a packet transmission apparatus in accordance with embodiment 7 of the present invention. While the fundamental structure of the packet transmission apparatus in accordance with this embodiment 5 is the same as that of above-mentioned embodiment 1, the packet transmission apparatus in accordance with this embodiment differs from that of embodiment 1 in that it is provided with a sent-out data transmission rate monitoring unit (i.e., a transmission rate monitoring unit) 9 for controlling the degree of transmission-error-tolerance of redundant packets assembled by a redundant packet generating unit 3. The sent-out data transmission rate monitoring unit 9 monitors the transmission rate of data which the packet transmission apparatus itself sends out, determines the degree of transmission-error-tolerance (e.g., the degree of redundancy) of redundant packets according to the transmission rate monitored thereby, and notifies the degree of transmission-error-tolerance to the redundant packet generating unit 3. The same components as those of Fig. 1 or like components are designated by the same reference numerals as shown in Fig. 1, and the explanation of those components will be omitted hereafter.

Next, the operation of the packet transmission apparatus in accordance with embodiment 7 of the present invention will be explained.

First, when accepting a voice band signal from a facsimile-terminal side, a voice encoding unit 1 performs voice coding, such as one according to ITU-T recommendation G.711, on the incoming voice band signal, and outputs the encoded voice signal to a packet generating unit 2, the redundant packet generating unit 3, and a facsimile signal detecting unit 4.

The sent-out data transmission rate monitoring unit 9 monitors the transmission rate of data which the packet transmission apparatus itself sends out, determines the degree of transmission-error-tolerance (e.g., the degree of redundancy) of redundant packets according to the transmission rate, and notifies the degree of transmission-error-tolerance to the redundant packet generating unit 3. For example, the sent-out data transmission rate monitoring unit 9 compares the transmission rate obtained as a result of monitoring with a threshold of the transmission rate which is preset for a transmission line so as to determine whether or not the transmission rate is high or low. After that, when determining that the data transmission rate is high, the sent-out data transmission rate monitoring unit 9 determines that there is a high possibility that line congestions occur in the transmission line and a packet loss takes place, and then raises the degree of transmission-error-tolerance (e.g., the degree of redundancy). In contrast, when determining that the data transmission rate is low, the sent-out data transmission rate monitoring unit 9 determines that there is a low possibility that a packet loss takes place, and then reduces the degree of transmission-error-tolerance (e.g., the degree of redundancy).

The packet generating unit 2 performs packetizing processing, as shown in Fig. 2, on the inputted encoded voice signal, and the redundant packet generating unit 3 performs packetizing processing, as shown in Fig. 3, on the inputted encoded voice signal based on the degree of transmission-error-tolerance (e.g., the degree of redundancy) about which the redundant packet generating unit 3 is notified by the sent-out data transmission rate monitoring unit 9.

The facsimile signal detecting unit 4 analyzes the encoded voice signal from the voice encoding unit 1, and determines whether or not the voice band signal inputted to the voice encoding unit 1 is a facsimile signal. When determining that the voice band signal inputted to the voice encoding unit 1 is a facsimile signal, the facsimile signal detecting unit 4 controls the selector 5 so as to select the output of the redundant packet generating unit 3. In contrast, when determining that the voice band signal inputted to the voice encoding unit 1 is not a facsimile signal, but is a voice signal, for example, the facsimile signal detecting unit 4 controls the selector 5 so as to select the output of the packet generating unit 2. The selector 5 selects either the packet generating unit 2 or the redundant packet generating unit 3, as an output source that furnishes redundant packets to the transmission-line side, based on the control by the facsimile signal detecting unit 4, and outputs the selected output signal to the transmission-line side.

As a result, when carrying out facsimile communications with a not-shown receive-side apparatus, the packet transmission apparatus makes it possible for the receive-side apparatus to receive a facsimile signal including FAX image data which are a main target for transmission in the form of redundant packets having a degree of transmission-error-tolerance (e.g., a degree of redundancy) depending upon the transmission rate of data which the packet transmission apparatus itself sends out. Therefore, even if a packet loss occurs while facsimile communications between the packet transmission apparatus and the not-shown receive-side apparatus are carried out, any transmission error caused by the packet loss can be recovered by using the redundant packets.

As mentioned above, in accordance with this embodiment 7, the packet transmission apparatus is provided with the sent-out data transmission rate monitoring unit 9 for monitoring the transmission rate of data which the packet transmission apparatus itself sends out, and for controlling the degree of transmission-error-tolerance of redundant packets assembled by the redundant packet generating unit 3 according to the transmission rate monitored thereby. Therefore, even in a case where a voice band signal to be transmitted via facsimile communications is assumed as a voice signal, and is IP-packetized and is transmitted over an IP network, as well as in a case where a voice signal to be transmitted via voice communications is IP-packetized using a VoIP technology, the packet transmission apparatus assembles redundant packets having a degree of transmission-error-tolerance (e.g., a degree of redundancy) depending upon the line quality of the transmission line from a facsimile signal including FAX image data which are a main target for transmission via facsimile communications, and then transmits the redundant packets to a receive-side apparatus. As a result, even though a transmission error, such as a packet loss, occurs, the packet transmission apparatus can effectively deal with the occurrence of the transmission error and can implement high-reliability transmission of a facsimile control signal. As a result, the packet transmission apparatus can provide facsimile communications in a condition of stability.

In accordance with above-mentioned embodiment 7, the selector 5 is disposed on the output side of the packet generating unit 2 and the redundant packet generating unit 3. As an alternative, the selector 5 can be disposed on the input side of the packet generating unit 2 and the redundant packet generating unit 3, and can output the encoded voice signal to either of the packet generating units 2 and 3 which it selects according to the control by the facsimile control signal detecting unit 6.

In accordance with any one of above-mentioned embodiments 2 to 4, the sent-out data transmission rate monitoring unit 9 of this embodiment can be added to the packet transmission apparatus. This variant offers the same advantage as provided by above-mentioned embodiment 7 in addition to the advantage provided by any one of above-mentioned embodiments 2 to 4.

### Embodiment 8.

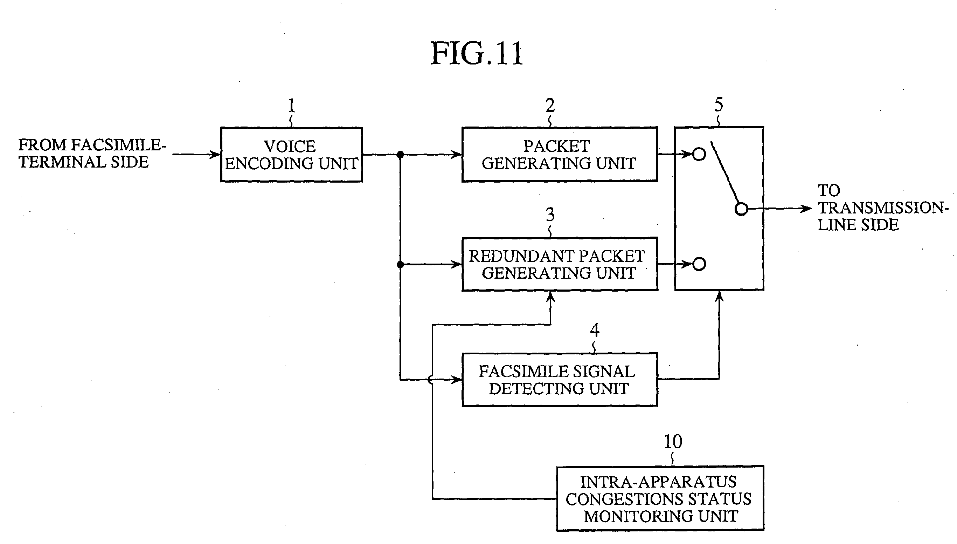

Fig. 11 is a block diagram showing the structure of a packet transmission apparatus in accordance with embodiment 8 of the present invention. While the fundamental structure of the packet transmission apparatus in accordance with this embodiment 5 is the same as that of above-mentioned embodiment 1, the packet transmission apparatus in accordance with this embodiment differs from that of embodiment 1 in that it is provided with an intra-apparatus congestions status monitoring unit (i.e., a congestions status monitoring unit) 10 for controlling the degree of transmission-error-tolerance of redundant packets created by a redundant packet generating unit 3. The intra-apparatus congestions status monitoring unit 10 monitors the level of congestions status of transmission of data within the packet transmission apparatus itself, determines the degree of transmission-error-tolerance (e.g., the degree of redundancy) of redundant packets according to the level of congestions status monitored thereby, and notifies the degree of transmission-error-tolerance to the redundant packet generating unit 3. The same components as those of Fig. 1 or like components are designated by the same reference numerals as shown in Fig. 1, and the explanation of those components will be omitted hereafter.

Next, the operation of the packet transmission apparatus in accordance with embodiment 8 of the present invention will be explained.

First, when accepting a voice band signal from a facsimile-terminal side, a voice encoding unit 1 performs voice coding, such as one according to ITU-T recommendation G.711, on the incoming voice band signal, and outputs the encoded voice signal to a packet generating unit 2, the redundant packet generating unit 3, and a facsimile signal detecting unit 4.

The intra-apparatus congestions status monitoring unit 10 monitors the level of congestions status of transmission of data within the packet transmission apparatus, determines the degree of transmission-error-tolerance (e.g., the degree of redundancy) of redundant packets according to the level of congestions status monitored thereby, and notifies the degree of transmission-error-tolerance to the redundant packet generating unit 3. To be more specific, the intra-apparatus congestions status monitoring unit 10 monitors the amount of data which flows within the packet transmission apparatus so as to determine the level of intra-apparatus congestions status. For example, the intra-apparatus congestions status monitoring unit 10 compares the determination result of the level of congestions status with a threshold of the level of congestions status which is preset within the packet transmission apparatus so as to determine whether or not the level of intra-apparatus congestions status is high or low. After that, when determining that the level of intra-apparatus congestions status is high, the intra-apparatus congestions status monitoring unit 10 determines that there is a high possibility that a packet loss takes place within the packet transmission apparatus and in a transmission line, and then raises the degree of transmission-error-tolerance (e.g., the degree of redundancy). In contrast, when determining that the level of intra-apparatus congestions status is low, the intra-apparatus congestions status monitoring unit 10 determines that there is a low possibility that a packet loss takes place, and then reduces the degree of transmission-error-tolerance (e.g., the degree of redundancy).

The packet generating unit 2 performs packetizing processing, as shown in Fig. 2, on the inputted encoded voice signal, and the redundant packet generating unit 3 performs packetizing processing, as shown in Fig. 3, on the inputted encoded voice signal based on the degree of transmission-error-tolerance (e.g., the degree of redundancy) about which the redundant packet generating unit 3 is notified by the intra-apparatus congestions status monitoring unit 10.

The facsimile signal detecting unit 4 analyzes the encoded voice signal from the voice encoding unit 1, and determines whether or not the voice band signal inputted to the voice encoding unit 1 is a facsimile signal. When determining that the voice band signal inputted to the voice encoding unit 1 is a facsimile signal, the facsimile signal detecting unit 4 controls the selector 5 so as to select the output of the redundant packet generating unit 3. In contrast, when determining that the voice band signal inputted to the voice encoding unit 1 is not a facsimile signal, but is a voice signal, for example, the facsimile signal detecting unit 4 controls the selector 5 so as to select the output of the packet generating unit 2. The selector 5 selects either the packet generating unit 2 or the redundant packet generating unit 3, as an output source that furnishes redundant packets to the transmission-line side, based on the control by the facsimile signal detecting unit 4, and outputs the selected output signal to the.transmission-line side.

As a result, when carrying out facsimile communications with a not-shown receive-side apparatus, the packet transmission apparatus makes it possible for the receive-side apparatus to receive a facsimile signal including FAX image data which are a main target for transmission in the form of redundant packets having a degree of transmission-error-tolerance (e.g., a degree of redundancy) depending upon the level of intra-apparatus congestions status. Therefore, even if a packet loss occurs while facsimile communications between the packet transmission apparatus and the not-shown receive-side apparatus are carried out, any transmission error caused by the packet loss can be recovered by using the redundant packets.

As mentioned above, in accordance with this embodiment 8, the packet transmission apparatus is provided with the intra-apparatus congestions status monitoring unit 10 for monitoring the level of congestions status of transmission of signals within the packet transmission apparatus, and for controlling the degree of transmission-error-tolerance of redundant packets assembled by the redundant packet generating unit 3 according to the level of congestions status monitored thereby. Therefore, even in a case where a voice band signal to be transmitted via facsimile communications is assumed as a voice signal, and is IP-packetized and is transmitted over an IP network, as well as in a case where a voice signal to be transmitted via voice communications is IP-packetized using a VoIP technology, the packet transmission apparatus assembles redundant packets having a degree of transmission-error-tolerance (e.g., a degree of redundancy) depending upon the level of intra-apparatus congestions status from a facsimile signal including FAX image data which are a main target for transmission via facsimile communications, and then transmits the redundant packets to a receive-side apparatus. As a result, even though a transmission error, such as a packet loss, occurs, the packet transmission apparatus can' effectively deal with the occurrence of the transmission error and can implement high-reliability transmission of a facsimile controlsignal. As a result, the packet transmission apparatus can provide facsimile communications in a condition of stability.

In accordance with above-mentioned embodiment 8, the selector 5 is disposed on the output side of the packet generating unit 2 and the redundant packet generating unit 3. As an alternative, the selector 5 can be disposed on the input side of the packet generating unit 2 and the redundant packet generating unit 3, and can output the encoded voice signal to either of the packet generating units 2 and 3 which it selects according to the control by the facsimile signal detecting unit 4.

In accordance with any one of above-mentioned embodiments 2 to 4, the intra-apparatus congestions status monitoring unit 10 of this embodiment can be added to the packet transmission apparatus. This variant offers the same advantage as provided by above-mentioned embodiment 8 in addition to the advantage provided by any one of above-mentioned embodiments 2 to 4.

The packet transmission apparatus in accordance with any one of above-mentioned embodiments 1 to 8 will be explained by taking a case where a voice band signal to be transmitted via facsimile communications is assumed as a voice signal, and is IP-packetized and is transmitted over an IP network, as well as a case where a voice signal to be transmitted via voice communications is IP-packetized using a VoIP technology, as examples. The present invention is not limited to these cases, and can be applied to digital communications other than facsimile communications, such as digital communications intended for transmission of simple moving images or digital communications intended for transmission of high-speed data.

### Industrial Applicability

As mentioned above, since the packet transmission apparatus in accordance with the present invention can implement high-reliability communications while preventing itself from entering a disconnection state even though a packet loss occurs when packet transmission using VoIP is carried out, the packet transmission apparatus in accordance with the present invention can be applied to a packet transmission system in which signals, such as ones to be transmitted via facsimile communications, are assumed as voice signals and are relayed via an IP network.

## Claims

1. A packet transmission apparatus comprising:
a voice encoding unit for voice-encoding an incoming voice band signal;
a packet generating unit for accepting the encoded voice signal from said voice encoding unit, and for assembling packets from the encoded voice signal and outputting them;
a redundant packet generating unit for accepting the encoded voice signal from said voice encoding unit, and for assembling redundant packets to each of which error correction data is added and outputting the redundant packets;
a selector unit for selecting, as an output source that furnishes packets to a transmission destination, either said packet generating unit or said redundant packet generating unit; and
a signal detecting unit for determining whether or not said voice band signal is a signal associated with predetermined data communications, and for controlling selection by said selector unit according to a result of the determination.

2. The packet transmission apparatus according to Claim 1, **characterized in that** said signal detection unit determines whether said incoming voice band signal is a facsimile signal indicating image data to be transmitted via facsimile communications or a facsimile control signal used for controlling a communication procedure of carrying out facsimile communications, and controls the selection by said selector unit according to a result of the determination.

3. A packet transmission apparatus comprising:
a voice encoding unit for voice-encoding an incoming voice band signal;
a packet generating unit for accepting the encoded voice signal from said voice encoding unit, and for assembling packets from the encoded voice signal and outputting them;
two more redundant packet generating units each for accepting the encoded voice signal from said voice encoding unit, and for assembling redundant packets to each of which error correction data having a different degree of transmission-error-tolerance is added from the encoded voice signal and outputting them;
a first selector unit for selecting, as an output source that furnishes packets to a transmission destination, either one of said two or more redundant packet generating units;
a second selector unit for selecting, as an output source that furnishes packets to a transmission destination, either said packet generating unit or a redundant packet generating unit selected by said first selector unit;
a first signal detecting unit for, when said voice band signal is a signal associated with predetermined data communications, controlling selection by said first selector unit according to a type of said voice band signal; and
a second signal detecting unit for determining whether or not said voice band signal is a signal associated with the predetermined data communications, and for controlling selection by said second selector unit according to a result of the determination.

4. A packet transmission apparatus comprising:
two or more voice encoding units each for performing voice encoding with a different coding rate on an incoming voice band signal;
a packet generating unit for selectively accepting an encoded voice signal having a largest coding rate from the encoded voice signals obtained by said two or more voice encoding units, and for assembling packets from said selected, encoded voice signal and outputting the packets;
two or more redundant packet generating units each for accepting the encoded voice signal from one of said two or more voice encoding units, and for assembling redundant packets to each of which error correction data having a different degree of transmission-error-tolerance is added from the encoded voice signal and outputting them;
a first selector unit for selecting, as an output source that furnishes packets to a transmission destination, either one of said two or more redundant packet generating units;
a second selector unit for selecting, as an output source that furnishes packets to a transmission destination, either said packet generating unit or a redundant packet generating unit selected by said first selector unit;
a first signal detecting unit for, when said voice band signal is a signal associated with predetermined data communications, controlling selection by said first selector unit according to a type of said voice band signal; and
a second signal detecting unit for determining whether or not said voice band signal is a signal associated with the predetermined data communications, and for controlling selection by said second selector unit according to a result of the determination.

5. The packet transmission apparatus according to Claim 3, **characterized in that** said two or more redundant packet generating units include a first redundant packet generating unit for accepting the encoded voice signal from said voice encoding unit and for assembling redundant packets having a predetermined degree of transmission-error-tolerance and a second redundant packet generating unit for accepting the encoded voice signal from said voice encoding unit and for assembling redundant packets having a higher degree of transmission-error-tolerance than that of the redundant packets assembled by said first redundant packet generating unit, and said first signal detecting unit determines whether or not said incoming voice band signal is a facsimile control signal used for controlling a communication procedure of carrying out facsimile communications, and controls the selection by said first selector unit according to a result of the determination and said second signal detecting unit determines whether or not said incoming voice band signal is a facsimile signal indicating image data to be transmitted via facsimile communications, and controls the selection by said second selector unit according to a result of the determination.

6. The packet transmission apparatus according to Claim 1, **characterized in that** said apparatus comprises a line quality monitoring unit for monitoring a line quality of a transmission line and for controlling a degree of transmission-error-tolerance of the redundant packets assembled by said redundant packet generating unit according to the line quality.

7. The packet transmission apparatus according to Claim 1, **characterized in that** said apparatus comprises a line quality information acquiring unit for receiving line quality information about a line quality of a transmission line from a receive apparatus connected to said packet transmission apparatus via said transmission line, and for controlling a degree of transmission-error-tolerance of the redundant packets assembled by said redundant packet generating unit according to the line quality information.

8. The packet transmission apparatus according to Claim 1, **characterized in that** said apparatus comprises a transmission rate monitoring unit for monitoring a transmission rate of signals sent out onto a transmission line, and for controlling a degree of transmission-error-tolerance of the redundant packets assembled by said redundant packet generating unit according to the transmission rate.

9. The packet transmission apparatus according to Claim 1, **characterized in that** said apparatus comprises a congestion condition monitoring unit for monitoring a congestion state of signals to be processed within said apparatus, and for controlling a degree of transmission-error-tolerance of the redundant packets assembled by said redundant packet generating unit according to the congestion state.
